# DEMANDE DE BREVET EUROPEEN

(11) **EP 2 177 873 A1**
(43) Date de publication de la demande: **21.04.2010**
(21) Numéro de dépôt: 09173422.8
(22) Date de dépôt: 19.10.2009
(51) Int. Cl.: G01C 17/38, G01C 23/00

(54) **Instrument combiné de secours et procédé de calibration associé**

(30) Priorité: 17.10.2008 FR 0805763
(71) Demandeur: Thales, 92200 Neuilly Sur Seine (FR)
(72) Inventeur: Hemelsdael, Charles, 41100, VENDOME (FR); Colliau, Florent, 41190, CHAMBON SURCISSE (FR)
(74) Mandataire: Collet, Alain

(57) **Abrégé**

L'invention concerne un instrument combiné de secours et un procédé de calibration de l'instrument combiné de secours. Un tel instrument permet de déterminer et d'afficher de façon autonome des informations de vol. Il est utilisé en cas de panne des instruments primaires de l'aéronef. L'invention a pour but de déterminer et d'afficher également de façon autonome un cap suivi par l'aéronef. Pour ce faire, un calculateur (28) de l'instrument (10) permet de déterminer un cap de l'aéronef à partir d'un capteur de champ magnétique et de calibrer le capteur de champ magnétique. L'écran de l'instrument (10) permet d'afficher le cap et un guide pour la calibration du capteur de champ magnétique.

## Description

L'invention concerne un instrument combiné de secours et un procédé de calibration de l'instrument combiné de secours. Un tel instrument est destiné à équiper la planche de bord d'un aéronef. II comprend un calculateur permettant de déterminer une altitude, une vitesse et une attitude de l'aéronef à partir de capteurs appartenant à l'instrument et un écran permettant d'afficher l'altitude, la vitesse et l'attitude de l'aéronef. Cet instrument permet de donner au pilote de l'aéronef des informations de vol utilisées en cas de panne des instruments de bord primaires de l'aéronef.

Le pilote de l'aéronef a également besoin d'informations de navigation lui permettant de suivre un plan de vol. Parmi ces informations, le cap lui permet de diriger l'aéronef par rapport au nord magnétique. Les instruments primaires de l'aéronef affichent le cap à partir d'un capteur magnétique généralement situé loin de la planche de bord. En effet, ce capteur, mesurant le champ magnétique terrestre, peut être perturbé par l'aéronef lui-même et notamment par les instruments de bord qui génèrent des perturbations électromagnétiques. Ces instruments étant nombreux dans la planche de bord, on cherche à éloigner le capteur magnétique, par exemple en le plaçant hors du cockpit de l'aéronef.

On prévoit également en secours un compas de route dans le cockpit de l'aéronef pour pallier un éventuel défaut dans la chaîne d'information primaire présentant au pilote l'information de cap. Ce compas de secours est communément disposé en partie haute de la verrière du cockpit, cet endroit étant le plus éloigné des autres instruments de bord, donc le moins perturbé par ceux-ci.

Bien que les capteurs magnétiques soient disposés dans les endroits les moins perturbés possibles, une déviation magnétique subsiste qu'il est nécessaire de compenser. A cet effet, on prévoit une procédure de compensation permettant de corriger les effets de l'aéronef et de tous les instruments qu'il comporte. Cette procédure prévoit par exemple de mesurer la direction du champ magnétique au moyen du capteur à compenser lors de déplacements angulaires de l'aéronef sur une piste d'un aérodrome. On compare ensuite les mesures au champ magnétique terrestre de l'aérodrome afin d'établir une courbe de déviation que l'on pourra utiliser en vol pour compenser le capteur. Pour ce faire, on connecte au capteur un instrument spécifique permettant de récupérer directement la mesure faite par le capteur avant que cette mesure ne soit traitée pour obtenir un affichage lisible par le pilote de l'aéronef. Le capteur magnétique associé aux instruments primaires ainsi que le compas de secours peuvent être compensés.

Par ailleurs, l'écran de l'instrument de secours, peut relayer l'information de cap donné par les instruments primaires. Mais dans ce cas, il ne s'agit que d'une redondance de l'affichage primaire, pas une redondance complète utilisant son propre capteur. Jusqu'à présent, aucun capteur magnétique permettant de donner une information sure de cap de secours n'a été intégré à l'instrument de secours du fait de la présence de nombreux composants électroniques dans l'instrument de secours lui-même. On estime en effet, que la compensation de tels capteurs ne permettrait pas d'obtenir une précision suffisante nécessaire au pilote pour poursuivre sa mission en cas de défaillance des instruments primaires.

L'invention vise à dépasser ce préjugé en proposant un instrument de secours affichant une information de cap complètement autonome des instruments primaires. A cet effet, l'invention propose de mettre en oeuvre une procédure de compensation suffisante même pour un capteur magnétique situé dans l'instrument de secours.

L'invention a pour objet un instrument combiné de secours destiné à équiper la planche de bord d'un aéronef, comprenant un calculateur permettant de déterminer une altitude, une vitesse et une attitude de l'aéronef à partir de capteurs appartenant à l'instrument, un écran permettant d'afficher l'altitude, la vitesse et l'attitude de l'aéronef, **caractérisé en ce que** le calculateur permet de déterminer un cap de l'aéronef à partir d'un capteur de champ magnétique et de calibrer le capteur de champ magnétique, en ce que l'écran permet d'afficher le cap et un guide pour la calibration du capteur de champ magnétique.

Le fait d'utiliser le calculateur de l'instrument de secours pour effectuer la calibration simplifie et fiabilise la calibration. En effet, on évite ainsi d'avoir recours à un instrument spécifique à la calibration qui pourrait perturber lui-même la mesure. Grace à l'invention, aucun instrument autre que ceux déjà présent sur la planche de bord n'est utilisé pour la calibration.

Avantageusement le capteur de champ magnétique utilisé par l'instrument de secours appartient à l'instrument lui même.

L'invention a également pour objet un procédé de calibration d'un instrument combiné de secours consistant à :
- permettre un choix d'un type de calibration en deux dimensions ou trois dimensions,
- réaliser une procédure de calibration ;
- afficher des facteurs de calibration déterminés lors de la procédure de calibration ;
- permettre l'acceptation ou le refus des facteurs de calibration.

L'invention sera mieux comprise et d'autres avantages apparaîtront à la lecture de la description détaillée d'un mode de réalisation donné à titre d'exemple, description illustrée par le dessin joint dans lequel :
La figure 1 représente un instrument combiné de secours ;
la figure 2 représente un schéma synoptique d'une procédure de calibration d'un instrument de secours ;
les figures 3a à 3e représentent un exemple d'affichages sur l'écran de l'instrument de secours permettant de guider un opérateur durant la procédure de calibration.

Par souci de clarté, les mêmes éléments porteront les mêmes repères dans les différentes figures.

Un instrument de secours permet de déterminer et d'afficher de façon autonome, une altitude, une vitesse, une attitude et un cap de l'aéronef à partir de capteurs appartenant à l'instrument. En cas de défaut des instruments primaires ou de défauts d'affichage des écrans de visualisation primaire, l'écran de l'instrument de secours est utilisé par les pilotes de l'aéronef. En phase de vol, les pilotes observent néanmoins l'écran de l'instrument de secours et notent les écarts éventuels avec les informations délivrées par les instruments primaires.

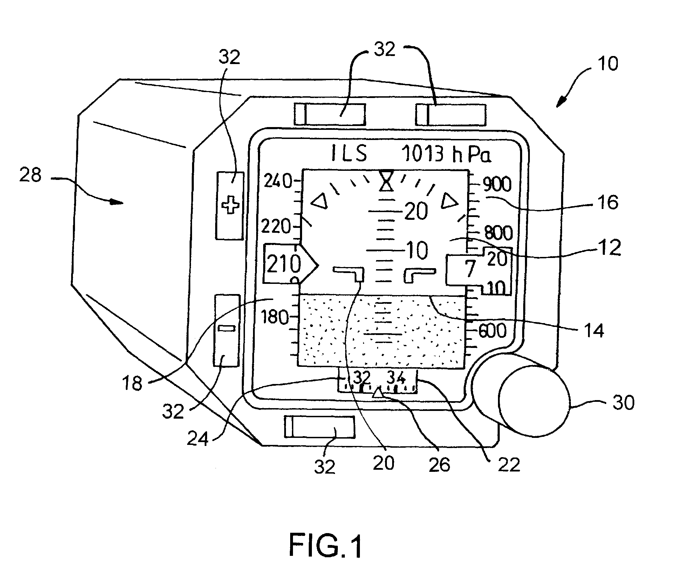

La figure 1 représente un instrument combiné de secours 10 équipant la planche de bord d'un aéronef. L'instrument 10 comporte un écran en couleur 12 pour l'affichage d'un horizon 14 (terre en marron au-dessous, ciel en bleu au-dessus) et de données de secours nécessaires au pilotage, à savoir principalement altitude sous forme d'une échelle graduée défilante 16 à droite, vitesse sous forme d'une autre échelle graduée défilante 18 à gauche, et un symbole 20 d'attitude de l'aéronef. Une zone 22 est réservée aux informations de cap présenté également sous forme d'une échelle graduée 24 défilant devant un index 26 fixe.

L'affichage de l'horizon et des données numériques de vitesse, d'altitude et de cap est déterminé par un calculateur 28 situé dans le corps de l'instrument 10 à partir de signaux en provenance de capteurs dont certains sont extérieurs à l'instrument 10 et dont d'autres peuvent être à l'intérieur ou à l'extérieur de l'instrument 10. Les capteurs sont en général des capteurs de pression (pour la vitesse et pour l'altitude) et une unité de mesure inertielle pour l'attitude et un ou plusieurs capteurs de champ magnétiques couramment appelés magnétomètres pour le cap. Avantageusement, les capteurs de pressions, l'unité de mesure inertielle et le magnétomètre sont situés à l'intérieur de l'instrument 10. Les capteurs de pression sont reliés à des prises de pression situés sur la peau de l'aéronef et permettant de mesurer la pression statique et la pression totale de l'air entourant l'aéronef.

L'instrument 10 comporte en général un bouton de réglage 30 servant au recalage de la pression atmosphérique en fonction de données communiquées localement (par exemple fournies par les services de météorologie à proximité d'un aéroport). II comporte d'autres boutons de commande 32 servant à divers usages (recalage d'horizon, mise en place sur l'écran de marques de plages de vitesse ou d'altitude autorisées, etc.).

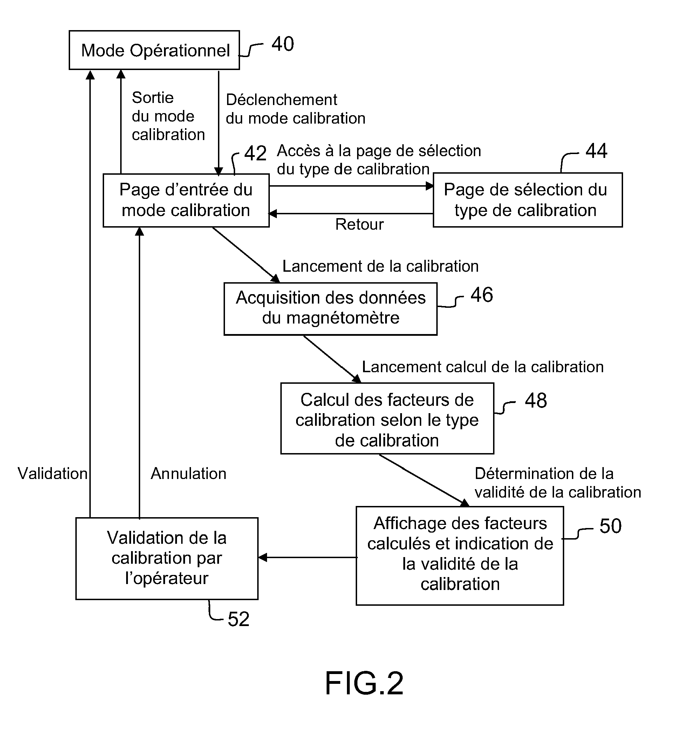

La figure 2 représente un schéma synoptique d'une procédure de calibration de l'instrument de secours 10. Cette procédure est guidée par un affichage approprié sur l'écran de l'instrument 10.

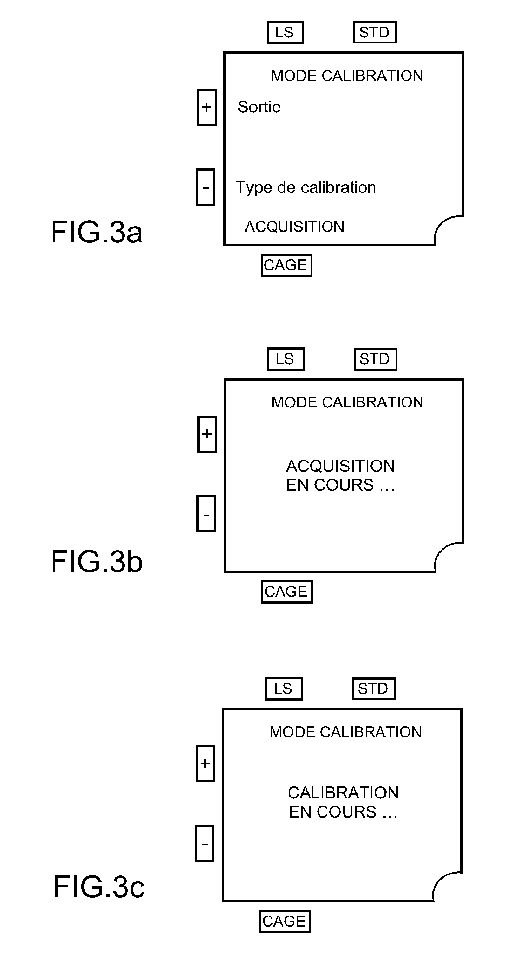

Au cadre 40, l'instrument 10 est dans un mode opérationnel. Dans ce mode, il détermine et affiche les informations de vol, altitude, attitude, vitesse et cap de l'aéronef telles que par exemple représentées sur la figure 1. Ce mode est celui utilisé en vol. Dans ce mode, l'opérateur, généralement un pilote d'essai, peut déclencher un mode de calibration au moyen d'un appui ou d'une combinaison d'appuis sur des boutons 32 situés en face avant de l'instrument de secours 10 pour aboutir sur une page d'entrée du mode de calibration 42. Un exemple d'affichage de cette page est donné sur la figure 3a.

A partir de cette page, l'opérateur peut soit revenir au mode opérationnel en appuyant sur le bouton 32 associé à l'affichage « sortie » soit choisir le type de calibration en accédant à une page 44 en appuyant sur le bouton 32 associé à l'affichage « type de calibration ».

La calibration peut être réalisée en deux dimensions. Plus précisément, on réalise des déplacements angulaires de l'aéronef dans un plan horizontal afin de déterminer dans ce plan des écarts entre l'azimut réel de l'aéronef et l'azimut mesuré par le magnétomètre à calibrer.

La calibration peut être réalisée en trois dimensions. Dans ce type de calibration, il serait difficile de déplacer l'aéronef suivant les trois dimensions. On préfère déplacer autour du magnétomètre un générateur de champ magnétique. On détermine des écarts entre la direction du champ magnétique généré et celle mesurée par le magnétomètre. On peut également déterminer des écarts entre l'intensité du champ généré et l'intensité mesurée par le magnétomètre. Une fois le type de calibration choisi, deux dimensions ou trois dimensions, l'opérateur revient à la page d'entrée du mode de calibration 42.

A partir de la page d'entrée 42, l'opérateur peut lancer la procédure de calibration en appuyant sur le bouton 32 associé à l'affichage « ACQUISITION ». Cette procédure comprend deux étapes enchaînées automatiquement. Une première étape 46, dont un exemple d'affichage est illustré figure 3b, permet l'acquisition des données mesurées par le ou les magnétomètres en fonction des variations de champ magnétiques dans lequel il est plongé.

Dans le cas d'une calibration en deux dimensions, l'invention consiste avantageusement lors du déroulement de l'algorithme de calibration, au cours de la première étape 46, à afficher sur l'écran des ordres de manoeuvre de l'aéronef. Après chaque manoeuvre, l'opérateur valide une mesure effectuée par le magnétomètre. Le manoeuvres consistent par exemple en un mouvement de rotation de l'aéronef au sol avec arrêt tous les 10°.

Au cours d'une seconde étape 48, dont un exemple d'affichage est illustré figure 3c, le calculateur 28 détermine des facteurs de calibration du magnétomètre en fonction du type de calibration retenu à la page 44. Habituellement, pour une calibration de type deux dimensions, les facteurs de calibration se résument à une courbe d'écart angulaire entre la direction du champ magnétique mesuré et la direction du champ magnétique terrestre en fonction de l'azimut de l'aéronef. Pour une calibration en trois dimensions, pour laquelle on a déterminé des écarts angulaires et des écarts d'intensité, les facteurs de calibration intègrent ces deux écarts. L'écart d'intensité peut être représenté par la déformation d'une sphère, la sphère parfaite correspondant à un écart nul quelque soit la direction du champ généré.

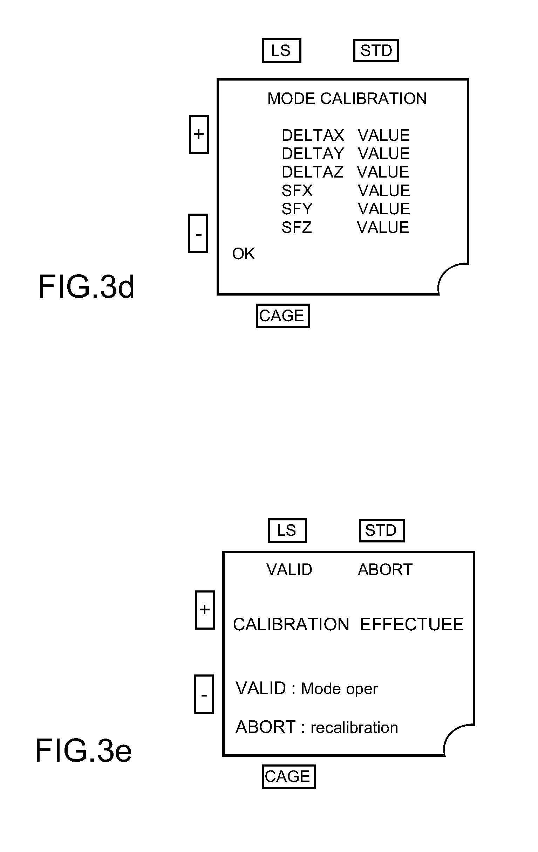

Une fois la seconde étape 48 terminée, une page 50 s'affiche automatiquement, page sur laquelle les facteurs de calibrations déterminés à la seconde étape 48 s'affichent. Un exemple d'affichage est représenté à la figure 3d pour une calibration de type trois dimensions. Trois paramètres notés DELTAX, DELTAY et DELTAZ définissent un écart de position du centre de la sphère et trois paramètres notés SFX, SFY et SFZ définissent un écart de forme de la sphère.

Avantageusement, la seconde étape peut prévoir de comparer les facteurs déterminés à des valeurs limites prédéterminées. Si l'un des facteurs est hors de ses valeurs limites, un message d'alerte apparait sur la page 50.

Après lecture des facteurs de calibration, et éventuellement du message d'alerte, l'opérateur quitte la page 50 en appuyant sur le bouton 32 associé à l'affichage « OK » pour atteindre une page 52 où l'opérateur peut valider ou non la calibration. Un exemple d'affichage de la page 50 est donné à la figure 3e. En appuyant sur le bouton 32 associé à l'affichage « VALID », l'opérateur revient dans le mode opérationnel 40. En appuyant sur le bouton 32 associé à l'affichage « ABORT », l'opérateur revient à la page 42 pour réaliser une nouvelle calibration.

## Revendications

1. Instrument combiné de secours destiné à équiper la planche de bord d'un aéronef, comprenant un calculateur (28) permettant de déterminer une altitude, une vitesse et une attitude de l'aéronef à partir de capteurs appartenant à l'instrument (10), un écran permettant d'afficher l'altitude, la vitesse et l'attitude de l'aéronef, **caractérisé en ce que** le calculateur (28) permet de déterminer un cap de l'aéronef à partir d'un capteur de champ magnétique et de calibrer le capteur de champ magnétique, **en ce que** l'écran permet d'afficher le cap et un guide pour la calibration du capteur de champ magnétique.

2. Instrument combiné de secours selon la revendication 1, **caractérisé en ce que** le capteur de champ magnétique appartient à l'instrument (10).

3. Procédé de calibration d'un instrument combiné de secours selon l'une des revendications précédentes, **caractérisé en ce qu'**il consiste à:
• permettre un choix d'un type de calibration en deux dimensions ou trois dimensions (44) ;
• réaliser une procédure de calibration (46, 48) ;
• afficher des facteurs de calibration (50) déterminés lors de la procédure de calibration (46, 48) ;
• permettre l'acceptation ou le refus des facteurs de calibration (52).

4. Procédé de calibration selon la revendication 3, **caractérisé en ce que** dans le cas d'une calibration en deux dimensions, il consiste lors du déroulement de la procédure de calibration (46, 48) à afficher sur l'écran des ordres de manoeuvre de l'aéronef.

5. Procédé de calibration selon l'une quelconque des revendications 3 ou 4, **caractérisé en ce qu'**elle comprend deux étapes enchaînées automatiquement, une première étape (46) permettant l'acquisition des données mesurées par le capteur de champ magnétique en fonction des variations de champ magnétiques dans lequel il est plongé et une seconde étape (48) permettant de déterminer des facteurs de calibration du magnétomètre en fonction du type de calibration retenu, deux dimensions ou trois dimensions.

6. Procédé de calibration selon la revendication 5, **caractérisé en ce que** lors de la seconde étape (48) on compare les facteurs déterminés à des valeurs limites prédéterminées, si l'un des facteurs est hors de ses valeurs limites, un message d'alerte est affiché.
